# EUROPÄISCHE PATENTANMELDUNG

(11) **EP 3 301 795 A1**
(43) Veröffentlichungstag der Anmeldung: **04.04.2018**
(21) Anmeldenummer: 17001480.7
(22) Anmeldetag: 05.09.2017
(51) Int. Cl.: H02K 15/00, B21D 7/08, B21D 11/06, B21D 53/16, H02K 17/16

(54) **VERFAHREN ZUR HERSTELLUNG EINES KURZSCHLUSSRINGS**

(30) Priorität: 30.09.2016 DE 102016011758
(71) Anmelder: Wieland-Werke AG, 89079 Ulm (DE)
(72) Erfinder: Voggeser, Volker, 89250 Senden (DE); Thumm, Gerhard, 89155 Erbach (DE)

(57) **Zusammenfassung**

Die Erfindung betrifft ein Verfahren zur Herstellung eines Kurzschlussrings (1) für einen Kurzschlussläufer einer Asynchronmaschine, wobei das Verfahren folgende Schritte in der genannten Reihenfolge umfasst:
a) Bereitstellen von Materialstreifen (2) aus einem metallischen Werkstoff,
b) Hochkantrollen der Materialstreifen (2), so dass offene scheibenförmige Ringe (31) geformt werden, und Stanzen von Durchbrüchen (5) in die scheibenförmigen Ringe (3, 31, 32)
oder
Stanzen von Durchbrüchen (5) in die Materialstreifen (2) und Hochkantrollen der Materialstreifen (2), so dass offene scheibenförmige Ringe (31) geformt werden,
c) Stapeln der Ringe (3, 31, 32), so dass die Durchbrüche (5) aller scheibenförmigen Ringe (3, 31, 32) fluchtend angeordnet sind,
d) Paketieren der einzelnen Ringe (3, 31, 32) durch Verbinden benachbarter Ringe (3, 31, 32).

Ferner betrifft die Erfindung ein Verfahren zur Herstellung eines Kurzschlussrings (1) für einen Kurzschlussläufer einer Asynchronmaschine, wobei das Verfahren folgende Schritte in der genannten Reihenfolge umfasst:
a) Bereitstellen eines Materialstreifens (2) aus einem metallischen Werkstoff,
b) Hochkantrollen des Materialstreifens (2) zu einer Wendel (4), Trennen des Materialstreifens (2) in mehrere Abschnitte derart, dass aus der Wendel (4) ein Stapel von mehreren offenen scheibenförmigen Ringen (31) gebildet wird, und Stanzen von Durchbrüchen (5) in die scheibenförmigen Ringe (3, 31, 32)
oder
Stanzen von Durchbrüchen (5) in den Materialstreifen (2), Hochkantrollen des Materialstreifens (2) zu einer Wendel (4) und Trennen des Materialstreifens (2) in mehrere Abschnitte derart, dass aus der Wendel (4) ein Stapel von mehreren offenen scheibenförmigen Ringen (31) gebildet
wird,
c) Paketieren der einzelnen Ringe (3, 31, 32) durch Verbinden benachbarter Ringe (3, 31, 32).

## Beschreibung

Die Erfindung betrifft Verfahren zur Herstellung eines Kurzschlussrings für einen Kurzschlussläufer einer Asynchronmaschine.

Ein Kurzschlussläufer einer Asynchronmaschine umfasst mindestens ein Läuferblechpaket, das eine Vielzahl von Aussparungen aufweist, und mindestens einen Läuferkäfig aus elektrisch leitenden Läuferstäben, die in die Aussparungen des Läuferblechpakets so eingebracht sind, dass die Läuferstäbe an ihren beiden Endbereichen einen Überstand über das Läuferblechpaket aufweisen, und aus stirnseitig an das Läuferblechpaket angebrachten Kurzschlussringen mit einer Vielzahl von im Bereich ihres äußeren Umfangs angeordneten Durchbrüchen, in die die Endbereiche der Läuferstäbe hineinragen.

Zur Herstellung des Läuferkäfigs sind verschiedene Methoden bekannt. In einigen Fällen wird der gesamte Läuferkäfig einstückig gegossen. In Abwandlung davon gibt es Ausführungen, bei denen die Läuferstäbe aus Halbzeug hergestellt und in die Aussparungen des Läuferblechpakets eingeschoben werden. Anschließend werden die Kurzschlussringe angegossen. Eine weitere Variante sieht demgegenüber vor, die Kurzschlussringe aus entsprechend geformten Scheiben herzustellen. Die Scheiben müssen elektrisch gut leitend und zuverlässig mit den Läuferstäben verbunden werden. Dies erfolgt in vielen Fällen durch einen Lötprozess, wie beispielsweise der Druckschrift DE 34 21 537 A1 entnommen werden kann. Die ringförmigen Scheiben werden üblicherweise aus einem Blech gestanzt. Dabei entsteht relativ viel Stanzabfall. Je nach Geometrie der Scheiben fallen bis zu 50 % des eingesetzten Blechs als Abfall an.

Der Erfindung liegt die Aufgabe zugrunde, verbesserte Verfahren für die Herstellung von Kurzschlussringen für einen Kurzschlussläufer einer Asynchronmaschine anzugeben.

Die Erfindung wird durch die Merkmale des Anspruchs 1 und durch die Merkmale des Anspruchs 3 wiedergegeben. Die weiteren rückbezogenen Ansprüche betreffen vorteilhafte Aus- und Weiterbildungen der Erfindung.

Die Erfindung schließt ein Verfahren zur Herstellung eines Kurzschlussrings für einen Kurzschlussläufer einer Asynchronmaschine ein, wobei das Verfahren folgende Schritte in der genannten Reihenfolge umfasst:
a) Bereitstellen von Materialstreifen aus einem metallischen Werkstoff,
b) Hochkantrollen der Materialstreifen, so dass offene scheibenförmige Ringe geformt werden, und Stanzen von Durchbrüchen in die scheibenförmigen Ringe
   oder
   Stanzen von Durchbrüchen in die Materialstreifen und Hochkantrollen der Materialstreifen, so dass offene scheibenförmige Ringe geformt werden,
c) Stapeln der Ringe, so dass die Durchbrüche aller scheibenförmigen Ringe fluchtend angeordnet sind,
d) Paketieren der einzelnen Ringe durch Verbinden benachbarter Ringe.

Die Erfindung geht dabei von der Überlegung aus, dass der Kurzschlussring eines Käfigläufers einer Asynchronmaschine aus mehreren scheibenförmigen Ringen, die zu einem Paket gestapelt sind, aufgebaut wird. Ein scheibenförmiger Ring kann dabei besonders materialsparend und damit günstig hergestellt werden, indem ein Materialstreifen aus einem metallischen Werkstoff hochkant zu einem scheibenförmigen Ring gerollt wird. Der bereitgestellte Materialstreifen besteht aus einem bandförmigen Werkstoff. Die Querschnittsform des Materialstreifens kann rechteckig sein, so dass der Materialstreifen eine einheitliche Dicke s aufweist. Alternativ kann die Querschnittsform des Materialstreifens trapezförmig oder keilförmig sein. In diesen Fällen ändert sich die Dicke s des Materialstreifens von einem Minimalwert zu einem Maximalwert. Der Materialstreifen weist zwei rechteckförmige Oberseiten, zwei parallele Längsseiten der Länge L sowie zwei Stirnseiten der Breite B auf. Die beiden Stirnseiten stellen die Enden dar, durch die der Materialstreifen bezüglich seiner Länge begrenzt wird. Die Dicke s des Materialstreifens ist kleiner als seine Breite B und die Länge L des Materialstreifens ist größer als seine Breite B.

Der Materialstreifen besteht aus einem metallischen Werkstoff, der bevorzugt Kupfer oder eine Kupferlegierung umfasst. Der Materialstreifen kann ein Monometall sein oder aus mehreren unterschiedlichen Metallen zusammengesetzt sein. Insbesondere kann er ein Bimetallstreifen sein.

Beim Hochkantrollen wird der Materialstreifen um eine Biegeachse gebogen, die senkrecht zur Oberseite des Materialstreifens ist. Der Materialstreifen wird dabei um ungefähr 360° gebogen, so dass sich die beiden Stirnseiten des Materialstreifens gegenüber stehen. Dadurch wird ein offener scheibenförmiger Ring geformt. Aus der ersten Längsseite des Materialstreifens wird der äußere Umfang des Rings gebildet, aus der zweiten Längsseite des Materialstreifens wird der innere Umfang des Rings gebildet. Die Breite des Rings entspricht ungefähr der ursprünglichen Breite B des Materialstreifens. Die mittlere Dicke des scheibenförmigen Rings ist ungefähr gleich der mittleren Dicke s des Materialstreifens. Bei einem Materialstreifen mit trapezförmigem oder keilförmigem Querschnitt werden durch die Trapez- oder Keilform die unterschiedlichen Streckungen der Außen-und Innenfaser beim Hochkantrollen des Materialstreifens kompensiert, so dass die scheibenförmigen Ringe einen nahezu rechteckförmigen Querschnitt aufweisen.

Bei einer ersten Ausführungsform des erfinderischen Verfahrens werden in jeden scheibenförmigen Ring Durchbrüche gestanzt. Diese Durchbrüche dienen zur Aufnahme der Enden von Läuferstäben, die in das Blechpaket des Käfigläufers eingebracht sind und die an beiden Enden einen Überstand über das Blechpaket aufweisen. Üblicherweise sind diese Durchbrüche nahe dem äußeren Umfang des scheibenförmigen Rings angeordnet.

Bei einer hierzu alternativen Ausführungsform der Erfindung werden die Verfahrensschritte Hochkantrollen und Stanzen der Durchbrüche in umgekehrter Reihenfolge durchgeführt. Dabei werden in die bereitgestellten Materialstreifen zunächst die erforderlichen Durchbrüche gestanzt. Anschließend werden diese Materialstreifen mittels Hochkantrollen zu offenen scheibenförmigen Ringen geformt.

Nach dem Verfahrensschritt b) werden mehrere Ringe so gestapelt, dass die Durchbrüche aller scheibenförmigen Ringe fluchtend angeordnet sind. Die Anzahl der gestapelten scheibenförmigen Ringe ergibt sich aus der Dicke der einzelnen Ringe und der angestrebten Dicke des gesamten Kurzschlussrings. Abschließend werden die einzelnen scheibenförmigen Ringe durch Verbinden benachbarter Ringe paketiert. Mögliche Verbindungsverfahren umfassen Schweißen, Crimpen, Nieten oder Stanzpaketieren. Das Verschweißen kann am äußeren oder am inneren Umfang der scheibenförmigen Ringe erfolgen. Es ist auch möglich, die scheibenförmigen Ringe sowohl am äußeren als auch am inneren Umfang zu verschweißen. Bevorzugte Schweißverfahren sind Laser- oder Elektronenstrahlschweißen.

Der besondere Vorteil des erfinderischen Verfahrens besteht darin, dass jeder bereitgestellte Materialstreifen vollständig zu einem scheibenförmigen Ring geformt wird. Es entsteht also kein Materialabfall wie er beispielsweise anfällt, wenn ein scheibenförmiger Ring aus einem Metallblech gestanzt wird.

Ein bereitgestellter Materialstreifen kann vorteilhafterweise an zumindest einer Längsseite eine Fase aufweisen. Das Hochkantrollen des Materialstreifens erfolgt dann derart, dass die Längsseite mit der Fase den äußeren Umfang des scheibenförmigen Rings bildet. Die Fase erstreckt sich ungefähr soweit in den Materialstreifen, dass sie nach dem Stanzen der Durchbrüche vom äußeren Umfang des scheibenförmigen Rings in Radialrichtung bis an die Durchbrüche heranreicht. Werden scheibenförmige Ringe mit einer derartigen Fase zu einem Kurzschlussring gestapelt, dann werden durch die Fasen benachbarter Ringe Nuten am äußeren Umfang des Kurzschlussrings gebildet. Die Nuten reichen bis zu den Durchbrüchen für die Läuferstäbe. Die Nuten ermöglichen ein besseres Verschweißen des Kurzschlussrings mit den Läuferstäben.

In bevorzugter Ausgestaltung der Erfindung können nach dem Hochkantrollen der Materialstreifen die beiden Enden jedes Materialstreifens miteinander stumpf verschweißt werden. Es werden also die beiden Stirnseiten jedes Materialstreifens flächig aneinander gefügt. Dadurch werden geschlossene scheibenförmige Ringe gebildet. Die geschlossenen scheibenförmigen Ringe weisen einen besonders geringen elektrischen Widerstand auf. Ferner sind sie sehr formstabil. Deshalb erfolgt dieser Schritt bevorzugt vor dem Stanzen der Durchbrüche.

Ein weiterer Aspekt der Erfindung schließt ein alternatives Verfahren zur Herstellung eines Kurzschlussrings für einen Kurzschlussläufer einer Asynchronmaschine ein. Das Verfahren umfasst dabei folgende Schritte in der genannten Reihenfolge:
a) Bereitstellen eines Materialstreifens aus einem metallischen Werkstoff,
b) Hochkantrollen des Materialstreifens zu einer Wendel, Trennen des Materialstreifens in mehrere Abschnitte derart, dass aus der Wendel ein Stapel von mehreren offenen scheibenförmigen Ringen gebildet wird, und Stanzen von Durchbrüchen in die scheibenförmigen Ringe
   oder
   Stanzen von Durchbrüchen in den Materialstreifen, Hochkantrollen des Materialstreifens zu einer Wendel und Trennen des Materialstreifens in mehrere Abschnitte derart, dass aus der Wendel ein Stapel von mehreren offenen scheibenförmigen Ringen gebildet wird,
c) Paketieren der einzelnen Ringe durch Verbinden benachbarter Ringe.

Die Erfindung geht dabei von der Überlegung aus, dass der Kurzschlussring eines Käfigläufers einer Asynchronmaschine aus einem Materialstreifen hergestellt wird, der mittels Hochkantrollen wendelförmig ausgeformt wird. Der bereitgestellte Materialstreifen besteht aus einem bandförmigen Werkstoff. Die Querschnittsform des Materialstreifens kann rechteckig sein, so dass der Materialstreifen eine einheitliche Dicke s aufweist. Alternativ kann die Querschnittsform des Materialstreifens trapezförmig oder keilförmig sein. In diesen Fällen ändert sich die Dicke s des Materialstreifens von einem Minimalwert zu einem Maximalwert. Der Materialstreifen weist zwei rechteckförmige Oberseiten, zwei parallele Längsseiten der Länge L sowie zwei Stirnseiten der Breite B auf. Die Länge L des Materialstreifens ist deutlich größer als seine Breite B. Die Dicke s des Materialstreifens ist kleiner als seine Breite B.

Der Materialstreifen besteht aus einem metallischen Werkstoff, der bevorzugt Kupfer oder eine Kupferlegierung umfasst. Der Materialstreifen kann ein Monometall sein oder aus mehreren unterschiedlichen Metallen zusammengesetzt sein. Insbesondere kann er ein Bimetallstreifen sein.

Beim Hochkantrollen wird der Materialstreifen um eine Biegeachse gebogen, die senkrecht zur Oberseite des Materialstreifens ist. Der Materialstreifen wird dabei ungefähr um ein ganzzahliges Vielfaches von 360° gebogen, so dass eine mehrlagige Wendel mit offenem Kern gebildet wird. Die Anzahl der Lagen der Wendel ergibt sich aus der mittleren Dicke s des Materialstreifens und der angestrebten Dicke des gesamten Kurzschlussrings. Die Querschnittsform einer einzelnen Lage der Wendel resultiert aus der Querschnittsform des bereitgestellten Materialstreifens. Aus der ersten Längsseite des Materialstreifens wird der äußere Umfang der Wendel gebildet, aus der zweiten Längsseite des Materialstreifens wird der innere Umfang der Wendel gebildet. Bei einem Materialstreifen mit trapezförmigem oder keilförmigem Querschnitt werden durch die Trapez- oder Keilform die unterschiedlichen Streckungen der Außen- und Innenfaser beim Hochkantrollen des Materialstreifens kompensiert, so dass die einzelnen Lagen der Wendel einen nahezu rechteckförmigen Querschnitt aufweisen.

Da sich an den beiden Stirnseiten der Wendel jeweils ein Ende des Materialstreifens befindet, sind die Stirnseiten der Wendel nach dem Hochkantrollen nicht eben, sondern sie weisen jeweils eine Stufe auf. Um diese Stufe zu beseitigen wird der wendelförmig gebogene Materialstreifen derart in Abschnitte getrennt, dass aus der Wendel ein Stapel von mehreren offenen scheibenförmigen Ringen gebildet wird. Durch den Trennprozess entstehen in jeder Lage der Wendel paarweise gegenüberstehende Trennflächen. Die einzelnen Lagen der Wendel werden dann so verformt, dass Trennflächen ursprünglich benachbarter Wendellagen einander paarweise gegenüberstehen und auf diese Weise scheibenförmige Ringe gebildet werden. Mit anderen Worten, aus jeder Lage der Wendel wird ein scheibenförmiger Ring gebildet, wodurch die Stufen an den Stirnseiten der Wendel beseitigt werden. Die Stirnseiten eines so hergestellten Kurzschlussrings sind dann eben und bilden jeweils eine glatte Anlagefläche.

Bei einer ersten Ausführungsform dieses erfinderischen Verfahrens werden in die gestapelten scheibenförmigen Ringe Durchbrüche gestanzt. Diese Durchbrüche dienen zur Aufnahme der Enden von Läuferstäben, die in das Blechpaket des Käfigläufers eingebracht sind und die an beiden Enden einen Überstand über das Blechpaket aufweisen. Üblicherweise sind diese Durchbrüche nahe dem äußeren Umfang des scheibenförmigen Rings angeordnet.

Bei einer hierzu alternativen Ausführungsform dieses erfinderischen Verfahrens werden die Verfahrensschritte Hochkantrollen und Stanzen der Durchbrüche in umgekehrter Reihenfolge durchgeführt. Dabei werden in den bereitgestellten Materialstreifen zunächst die erforderlichen Durchbrüche gestanzt. Anschließend wird dieser Materialstreifen mittels Hochkantrollen zu einer Wendel geformt.

Abschließend werden die einzelnen Ringe durch Verbinden benachbarter Ringe paketiert. Mögliche Verbindungsverfahren umfassen Schweißen, Crimpen, Nieten oder Stanzpaketieren. Das Verschweißen kann am äußeren oder am inneren Umfang der Ringe erfolgen. Es ist auch möglich, die Ringe sowohl am äußeren als auch am inneren Umfang zu verschweißen. Bevorzugte Schweißverfahren sind Laser- oder Elektronenstrahlschweißen.

Der besondere Vorteil des erfinderischen Verfahrens besteht darin, dass der bereitgestellte Materialstreifen vollständig zu scheibenförmigen Ringen geformt wird. Es entsteht also kein Materialabfall wie er beispielsweise anfällt, wenn ein scheibenförmiger Ring aus einem Metallblech gestanzt wird.

In Analogie zum ersten erfinderischen Verfahren kann auch bei diesem zweiten, alternativen erfinderischen Verfahren der bereitgestellte Materialstreifen vorteilhafterweise an zumindest einer Längsseite eine Fase aufweisen. Daraus ergeben sich die gleichen Vorteile wie im Zusammenhang mit dem ersten erfinderischen Verfahren beschrieben wurde.

In bevorzugter Ausgestaltung der Erfindung können nach dem Trennen des Materialstreifens in mehrere Abschnitte die beiden Enden jedes Abschnitts miteinander stumpf verschweißt werden. Es werden also die Trennflächen ursprünglich benachbarter Wendellagen flächig aneinander gefügt. Dadurch werden aus den offenen scheibenförmigen Ringen geschlossene scheibenförmige Ringe gebildet. Die geschlossenen scheibenförmigen Ringe weisen einen besonders geringen elektrischen Widerstand auf. Ferner sind sie sehr formstabil. Deshalb erfolgt dieser Schritt bevorzugt vor dem Stanzen der Durchbrüche.

In vorteilhafter Ausführung der Erfindung kann zur Herstellung eines Kurzschlussrings ferner nach dem Paketieren der einzelnen scheibenförmigen Ringe jeweils ein Innenkonus in die Durchbrüche für die Läuferstäbe geprägt werden. Die Läuferstäbe weisen bei dieser Ausführungsform bevorzugt einen entsprechenden Außenkonus an ihren beiden Enden auf. Durch diese Kombination von Innenkonus und Außenkonus lassen sich die Kurzschlussringe leicht auf das Blechpaket des Kurzschlussläufers montieren, da sich die Enden der Läuferstäbe leicht in die Durchbrüche der Kurzschlussringe einführen lassen. Ferner wird durch die konische Passung eine gute mechanische Verbindung zwischen den Kurzschussringen und den Läuferstäben gewährleistet.

Ausführungsbeispiele der Erfindung werden anhand der schematischen Zeichnungen näher erläutert. Darin zeigen:
- Fig. 1: einen Materialstreifen
- Fig. 2: einen offenen scheibenförmigen Ring mit Durchbrüchen
- Fig. 3: einen geschlossenen scheibenförmigen Ring mit Durchbrüchen
- Fig. 4: einen gemäß dem ersten Verfahren hergestellten Kurzschlussring
- Fig. 5: einen weiteren gemäß dem ersten Verfahren hergestellten Kurzschlussring
- Fig. 6: eine Wendel aus einem hochkantgerollten Materialstreifen
- Fig. 7: einen gemäß dem zweiten Verfahren hergestellten Kurzschlussring.

Einander entsprechende Teile sind in allen Figuren mit denselben Bezugszeichen versehen.

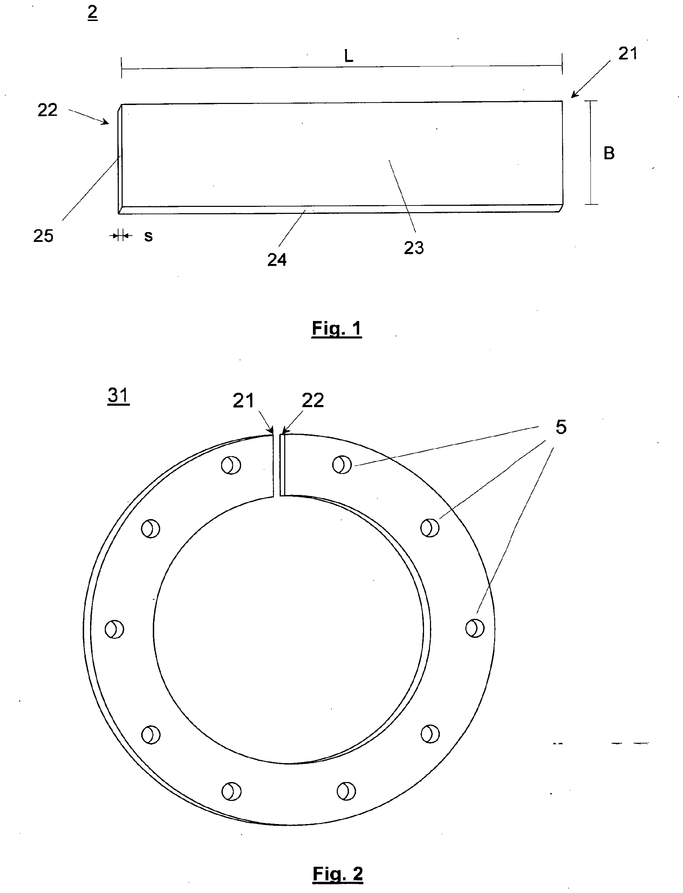

Fig. 1 zeigt schematisch einen Materialstreifen 2 der Länge L, der Breite B und der Dicke s. In der dargestellten Ansicht sind jeweils eine Oberseite 23, eine Längsseite 24 und eine Stirnseite 25 des Materialstreifens 2 sichtbar. Die beiden Stirnseiten 25 bilden die beiden Enden 21 und 22 des Materialstreifens. Anstelle eines rechteckigen Querschnitts kann der Materialstreifen alternativ auch einen trapezförmigen oder keilförmigen Querschnitt aufweisen. Die Dicke s würde sich dann entlang der Breite B kontinuierlich verändern.

Fig. 2 zeigt schematisch einen offenen scheibenförmigen Ring 31, der mittels Hochkantrollen aus einem Materialstreifen gemäß Fig. 1 geformt wurde. Der Materialstreifen wurde um ungefähr 360° gebogen, so dass die beiden Enden 21 und 22 des Materialstreifens 2 einander gegenüber stehen. Ferner weist der scheibenförmige Ring 31 Durchbrüche 5 auf, wie sie nach Durchführung des Verfahrensschritts b) des ersten erfindungsgemäßen Verfahrens vorhanden sind.

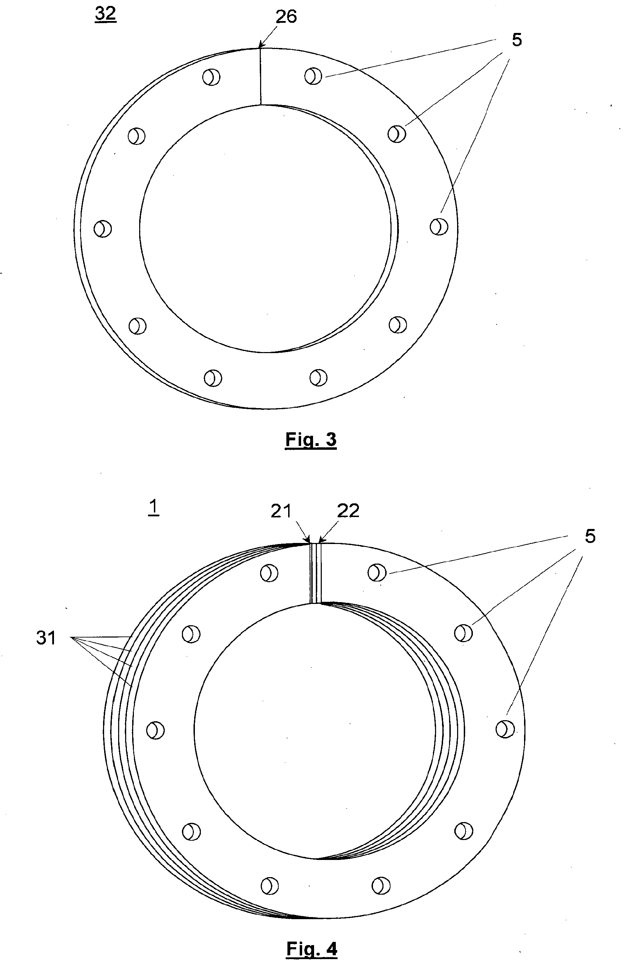

Fig. 3 zeigt schematisch einen geschlossenen scheibenförmigen Ring 32. Ein solcher geschlossener Ring 32 wird aus einem offenen Ring 31 gemäß Fig. 2 gebildet, indem die beiden Enden 21 und 22 des Materialstreifens miteinander verschweißt werden. Eine Schweißnaht 26 ist zu erkennen.

Fig. 4 zeigt schematisch einen Kurzschlussring 1, der mittels des ersten erfindungsgemäßen Verfahrens hergestellt wurde. Beim dargestellten Kurzschlussring 1 wurden vier offene scheibenförmige Ringe 31 gemäß Fig. 2 zu einem Stapel zusammengebaut und durch Verschweißen paketiert. Die jeweiligen Enden 21 und 22 der Materialstreifen 2 stehen einander paarweise gegenüber. Die vier offenen scheibenförmigen Ringe 31 wurden so gestapelt, dass die Enden 21 und 22 der Materialstreifen 2 jeweils an der gleichen Position bezogen auf die Umfangsrichtung der scheibenförmigen Ringe 31 positioniert sind. Ferner weist der Kurzschlussring 1 Durchbrüche 5 auf.

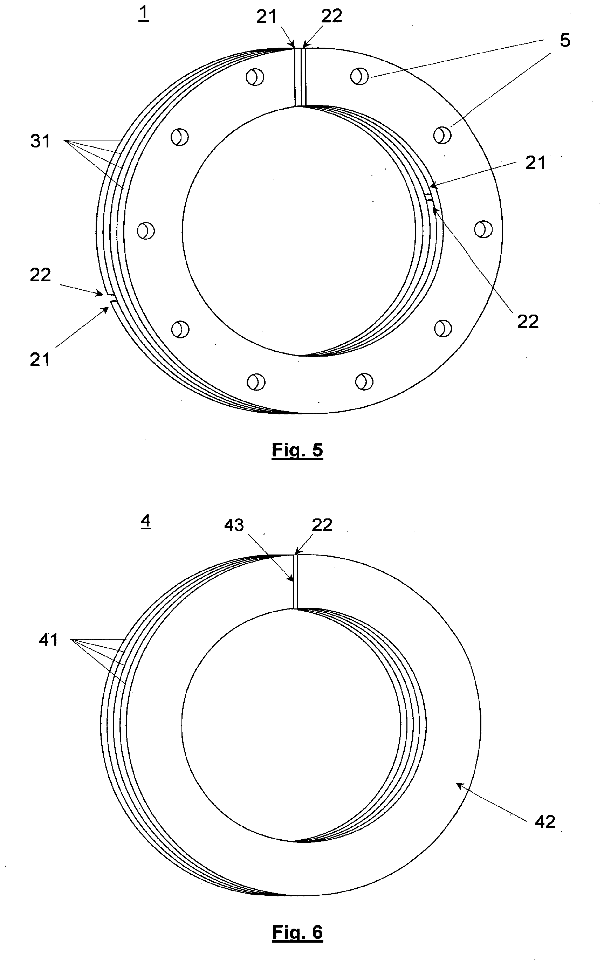

Fig. 5 zeigt schematisch einen Kurzschlussring 1 in einer gegenüber dem in Fig. 4 dargestellten Kurzschlussring 1 abgewandelten Ausführungsform. Der zweite offene scheibenförmige Ring 31 wurde um 72° im Uhrzeigersinn gegenüber dem ersten offenen scheibenförmigen Ring 31 verdreht. Der dritte offene scheibenförmige Ring 31 wurde um 180° gegenüber dem ersten offenen scheibenförmigen Ring 31 verdreht. Der vierte offene scheibenförmige Ring 31 wurde um 252° im Uhrzeigersinn gegenüber dem ersten offenen scheibenförmigen Ring 31 verdreht. Durch das Verdrehen der scheibenförmigen Ringe 31 wurden die Enden 21 und 22 der Materialstreifen 2 über den Umfang des Kurzschlussrings 1 verteilt. Somit ergibt sich eine mechanisch besonders stabile Ausführungsform des Kurzschlussrings 1.

Fig. 6 zeigt schematisch eine Wendel 4 aus einem hochkantgerollten Materialstreifen 2 gemäß Fig. 1. Die Wendel 4 weist vier Lagen 41 auf. Auf der sichtbaren Stirnseite 42 der Wendel 4 ist ein Ende 22 des Materialstreifens 2 zu erkennen. Das Ende 22 des Materialstreifens 2 bildet eine Stufe 43 auf der Stirnfläche 42 der Wendel 4. Die in Fig. 6 dargestellte Wendel 4 entspricht einem Zustand, bei dem das Hochkantrollen gemäß Verfahrensschritt b) des zweiten erfindungsgemäßen Verfahren bereits durchgeführt wurde, das Trennen des Materialstreifens 2 in mehrere Abschnitte und das Stanzen von Durchbrüchen 5 jedoch noch nicht durchgeführt wurden.

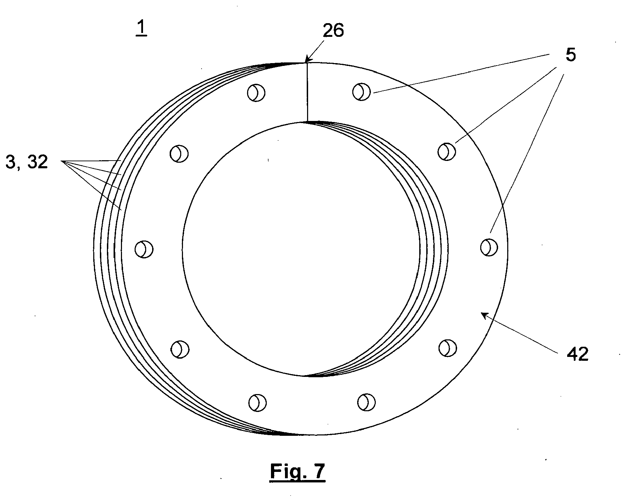

Fig. 7 zeigt schematisch einen Kurzschlussring 1, der mittels des zweiten erfindungsgemäßen Verfahrens hergestellt wurde. Dabei wurde die in Fig. 6 dargestellte Wendel 4 durch einen Trennprozess derart in Abschnitte zerlegt, dass aus den einzelnen Lagen 41 der Wendel scheibenförmige Ringe 3 gebildet wurden. Die jeweils gegenüberliegenden Enden der Abschnitte wurden miteinander verschweißt, so dass geschlossene scheibenförmige Ringe 32 gebildet wurden. Eine Schweißnaht 26 ist zu erkennen. Die Stirnseite 42 der Wendel 4 weist nach diesem Verfahrensschritt keine Stufe auf. Ferner weist der Kurzschlussring 1 Durchbrüche 5 auf.

### Bezugszeichenliste

- 1: Kurzschlussring
- 2: Materialstreifen
- 21: Ende des Materialstreifens
- 22: Ende des Materialstreifens
- 23: Oberseite des Materialstreifens
- 24: Längsseite des Materialstreifens
- 25: Stirnseite des Materialstreifens
- 26: Schweißnaht
- 3: scheibenförmiger Ring
- 31: offener scheibenförmiger Ring
- 32: geschlossener scheibenförmiger Ring
- 4: Wendel
- 41: Lage der Wendel
- 42: Stirnseite der Wendel
- 43: Stufe
- 5: Durchbruch

- L: Länge des Materialstreifens
- B: Breite des Materialstreifens
- s: Dicke des Materialstreifens

## Patentansprüche

1. Verfahren zur Herstellung eines Kurzschlussrings (1) für einen Kurzschlussläufer einer Asynchronmaschine, wobei das Verfahren folgende Schritte in der genannten Reihenfolge umfasst:
a) Bereitstellen von Materialstreifen (2) aus einem metallischen Werkstoff,
b) Hochkantrollen der Materialstreifen (2), so dass offene scheibenförmige Ringe (31) geformt werden, und Stanzen von Durchbrüchen (5) in die scheibenförmigen Ringe (3, 31, 32) oder
Stanzen von Durchbrüchen (5) in die Materialstreifen (2) und Hochkantrollen der Materialstreifen (2), so dass offene scheibenförmige Ringe (31) geformt werden,
c) Stapeln der Ringe (3, 31, 32), so dass die Durchbrüche (5) aller scheibenförmigen Ringe (3, 31, 32) fluchtend angeordnet sind,
d) Paketieren der einzelnen Ringe (3, 31, 32) durch Verbinden benachbarter Ringe (3, 31, 32).

2. Verfahren nach Anspruch 1, **dadurch gekennzeichnet, dass** nach dem Hochkantrollen der Materialstreifen (2) die beiden Enden (21, 22) jedes Materialstreifens (2) verschweißt werden, so dass geschlossene scheibenförmige Ringe (32) gebildet werden.

3. Verfahren zur Herstellung eines Kurzschlussrings (1) für einen Kurzschlussläufer einer Asynchronmaschine, wobei das Verfahren folgende Schritte in der genannten Reihenfolge umfasst:
a) Bereitstellen eines Materialstreifens (2) aus einem metallischen Werkstoff,
b) Hochkantrollen des Materialstreifens (2) zu einer Wendel (4), Trennen des Materialstreifens (2) in mehrere Abschnitte derart, dass aus der Wendel (4) ein Stapel von mehreren offenen scheibenförmigen Ringen (31) gebildet wird, und Stanzen von Durchbrüchen (5) in die scheibenförmigen Ringe (3, 31, 32)
oder
Stanzen von Durchbrüchen (5) in den Materialstreifen (2), Hochkantrollen des Materialstreifens (2) zu einer Wendel (4) und Trennen des Materialstreifens (2) in mehrere Abschnitte derart, dass aus der Wendel (4) ein Stapel von mehreren offenen scheibenförmigen Ringen (31) gebildet wird,
c) Paketieren der einzelnen Ringe (3, 31, 32) durch Verbinden benachbarter Ringe (3, 31, 32).

4. Verfahren nach Anspruch 3, **dadurch gekennzeichnet, dass** nach dem Trennen des Materialstreifens (2) in mehrere Abschnitte die beiden Enden jedes Abschnitts verschweißt werden, so dass aus den offenen scheibenförmigen Ringen (31) geschlossene scheibenförmige Ringe (32) gebildet werden.
